# EUROPEAN PATENT SPECIFICATION

(11) **EP 3 659 311 B1**
(45) Date of publication and mention of the grant of the patent: **07.10.2020**
(21) Application number: 17746458.3
(22) Date of filing: 28.07.2017
(51) Int. Cl.: H04L 29/06, H04L 9/32, G06F 21/64

(54) **DATA STREAM INTEGRITY**
DATENSTROMINTEGRITÄT
INTÉGRITÉ DE FLUX DE DONNÉES

(43) Date of publication of application: 03.06.2020
(73) Proprietor: Telefonaktiebolaget LM Ericsson (PUBL), 164 83 Stockholm (SE)
(72) Inventor: BILLSTRÖM, Adam Hemlin, 132 47 Saltsjö-boo (SE); HUSS, Fabian, 141 37 Huddinge (SE); KRISTIANSSON, Johan, 975 96 Luleå (SE)
(74) Representative: Ericsson
(86) International application number: PCT/EP2017/069151
(87) International publication number: WO 2019/020194

(56) References cited:
- US-A1- 2002 194 209
- US-A1- 2005 235 154
- US-B1- 8 832 466

## Description

### TECHNICAL FIELD

Disclosed are embodiments related to data integrity.

### BACKGROUND

The area of data verification and identification (e.g., identification and verification of video content or other data) uses different techniques. One technique called locality sensitive hashing (used for video identification) is used to find videos which are very similar to other videos, thereby identifying copies. This technique is used by entities such as YouTube. YouTube's solution is called "Content ID," and it is a very potent tool to find copies which have been slightly altered to avoid or obstruct detection. It does not, however, verify the integrity of the original video. Instead, the main purpose of the "Content ID" solution is to make sure copyright protected materials do not get uploaded without the copyright owner's knowledge and/or permission. This is a solution to help established content creators limit the distribution of their content. Facebook has a similar tool called "Rights Manager" with a similar purpose.

The documents US2005/235154 A1, US2002/194209 A1 and US8832466 B1 disclose data integrity verification solutions based on hashes of file blocks.

### SUMMARY

Content ID and Rights Manager both protect the content creators, in order to make sure their content is used in a legitimate way. Neither, however, allow for a user to verify the integrity of the content and/or the content's metadata. Such verification, for example, allows a user to trust that the content (e.g., video, time-series sensor data) is original and/or authentic (e.g., has not been altered). For instance, if a video is uploaded according to disclosed embodiments, but the video has been edited so that critical context is missing from the video, a user may be able to determine that the video has been edited. Examples of the content's metadata (which may also be verified by disclosed embodiments) include content creation time, geolocation of content creation, device which created content, and so on. Generally, the content's metadata may be any data about the content (e.g., describing the content).

Embodiments may use trusted applications, real time hashing techniques, smart contracts, and immutable databases to give content viewers a way of verifying data integrity (e.g., verifying data and metadata associated with the data). For example, embodiments can be used to determine if a video is taken *when* it (or its metadata) claims the video was taken and *where* it (or its metadata) claims the video was taken; and to determine if the video was modified (e.g., parts added or cut or otherwise edited) from the original. Embodiments can also be used to determine that sensor data reported by a sensor has not been altered.

It is not currently possible to verify data (e.g., video data) and its associated metadata in this manner. The invention is defined by the independent claims that accompany this disclosure. Any examples and embodiments of the description not falling within the scope of the claims do not form part of the invention as defined by the independent claims.

According to a first aspect, a method for creating verifiable data streams is provided. The method includes creating a first hash value by hashing a combination of a first portion of the data stream and a first metadata associated with a data stream; and creating a second hash value by hashing a combination of a second portion of the data stream and a second metadata associated with the data stream. The method further includes creating a third hash value by hashing a combination comprising the first hash value and the second hash value. The method further includes uploading to a database a first verified hash value. The first verified hash value is based on the third hash value.

Embodiments of the first aspect work with real-time data streams (e.g., real-time video) as well as regular files. Embodiments may also utilize real-time hashing and uploading, which may contribute to a high level of integrity of the uploaded hashes. Embodiments may also utilize immutable databases together with smart contracts, which may also contribute to a high level of integrity of the uploaded hashes.

In embodiments, the first metadata is identical to the second metadata. In embodiments, the first metadata is different than the second metadata. In embodiments, the first metadata comprises one or more of (i) a first location information and (ii) a first frame identifier, and wherein the second metadata comprises one or more of (i) a second location information and (ii) a second frame identifier.

In embodiments, the first verified hash value is the third hash value.

In embodiments, the method further includes creating a fourth hash value by hashing a combination of a third portion of the data stream and a third metadata associated with the data stream; and creating a fifth hash value by hashing a combination of a fourth portion of the data stream and a fourth metadata associated with the data stream. The method further includes creating a sixth hash value by hashing a combination comprising the fourth hash value and the fifth hash value. The method further includes creating the first verified hash value. Creating the first verified hash value includes hashing a combination of the third hash value and the sixth hash value.

In embodiments, the method further includes obtaining N additional portions of the data stream, wherein N is a whole number > 1; and creating a second verified hash value for use in verifying the group of N additional portions of the data stream. The method further includes uploading to the database the second verified hash value. In some embodiments, obtaining the N additional portions of the data stream includes obtaining a fifth portion of the data stream and a sixth portion of the data stream. In some embodiments, creating the second verified hash value for use in verifying the group of N additional portions of the data stream includes: (1) creating a seventh hash value by hashing a combination of the fifth portion of the data stream and a fifth metadata associated with the data stream; (2) creating an eighth hash value by hashing a combination of the sixth portion of the data stream and a sixth metadata associated with the data stream; and (3) creating the second verified hash value using the seventh hash value and eighth hash value. In embodiments, creating the second verified hash value using the seventh hash value and eighth hash value includes hashing a combination of the seventh hash value and eighth hash value to create a ninth hash value, and the second verified hash value is based on the ninth hash value.

In embodiments, the data stream comprises MPEG encoded data; and each said portion of the data stream comprises not more than one MPEG I-frame. In embodiments, the data stream comprises MPEG encoded data; and each said portion of the data stream comprises more than one MPEG I-frame. In embodiments, the data stream includes a time-series of sensor data.

In embodiments, the first and/or second verified hash value is obtained from a root of a Merkle tree, such that leaf nodes of the Merkle tree are values obtained by hashing a combination of a respective portion of the data stream and respective metadata associated with the data stream, and non-leaf nodes of the Merkle tree are values obtained by hashing a combination of direct children of the respective non-leaf node.

One advantage of using Merkle trees as described herein is that the number of interactions with the database (e.g., immutable database and/or blockchain) may be decreased without a corresponding increase in the size of the buffers. In other embodiments, increasing buffer sizes may also decrease interaction with the database (e.g., immutable database and/or blockchain).

According to a second aspect, a method for verifying content is provided. The method includes receiving a first portion of the content; and creating a first hash value by hashing a combination of the first portion of the content and the first metadata associated with the content. The method further includes, after receiving the first portion of the content, receiving a second portion of the content; and creating a second hash value by hashing a combination of the second portion of the content and the second metadata associated with the content. The method further includes creating a third hash value by hashing a combination comprising the first hash value and the second hash value. The method further includes obtaining a first verified hash value for verifying at least the first and second portions of the content; and comparing a first value to the first verified hash value, wherein the first value is based on the third hash value. The method further includes verifying the first and second portions of the content as a result of determining that the first value equals the first verified value.

Embodiments of the second aspect share advantages with those of the first aspect. For example, embodiments work with real-time data streams (e.g., real-time video) as well as regular files. Embodiments may also utilize real-time hashing and uploading, which may contribute to a high level of integrity of the uploaded hashes. Embodiments may also utilize immutable databases together with smart contracts, which may also contribute to a high level of integrity of the uploaded hashes.

Embodiments also can decrease interactions with the database (e.g., immutable database and/or blockchain) by using Merkle trees, without needing to increase buffer sizes. Or, in other embodiments, interactions with the database (e.g., immutable database and/or blockchain) can by decreased by increasing buffer sizes.

Additionally, embodiments of the second aspect allow for verification of data streams and associated metadata (e.g., video and video metadata) by a web client. In embodiments, a web client may verify incrementally as data streams (e.g., videos) are being recorded and uploaded to a content server. Embodiments allow a user to verify the associated metadata as well as segments of the corresponding content, as well as identify specific segments that have been tampered with or changed (e.g., content added, cut, or otherwise edited). In embodiments, the ability to verify individual segments may be limited in granularity by certain parameters (e.g. hashing parameters), including for instance the granularity of a buffer-size parameter. That is, in some embodiments, a user may not be able to detect verification of *any* segment, but only of segments that correspond to certain parameters (e.g., only able to verify at video-frame level, or Group-of-Picture (GOP) level). Embodiments may also allow a user receiving the content to verify if the content was uploaded at a specified time.

Embodiments allow a user to verify whether a data stream (for e.g. a video) is taken out of context, out of place, or if the data stream (e.g. video) has been tampered with, and provide a user with a tool to test if the data stream (e.g. video) is trustable.

Advantages of the first and second aspects also apply to the other aspects herein disclosed.

In embodiments, the method further includes, after receiving the second portion of the content, receiving a third portion of the content; and creating a fourth hash value by hashing a combination of a third portion of the content and a third metadata associated with the content. The method further includes, after receiving the third portion of the content, receiving a fourth portion of the content; and creating a fifth hash value by hashing a combination of a fourth portion of the content and a fourth metadata associated with the content. The method further includes creating a sixth hash value by hashing a combination comprising the fourth hash value and the fifth hash value; and creating the first value. Creating the first value includes hashing a combination of the third hash value and the sixth hash value. Verifying the first and second portions of the content as a result of determining that the first value equals the first verified value further includes verifying the third and fourth portions of the content.

In embodiments, the method further includes obtaining N additional portions of the content, wherein N is a whole number > 1; and obtaining a second verified hash value for use in verifying the group of N additional portions of the content. The method further includes creating a second value based on the N additional portions of the content; and comparing the second value to the second verified hash value. The method further includes verifying the N additional portions of the content as a result of determining that the second value equals the second verified value. In embodiments, obtaining the N additional portions of the content includes obtaining a fifth portion of the content and a sixth portion of the content. In embodiments, creating the second value includes (1) creating a seventh hash value by hashing a combination of the fifth portion of the content and a fifth metadata associated with the content; (2) creating an eighth hash value by hashing a combination of the sixth portion of the content and a sixth metadata associated with the content; and (3) creating the second value using the seventh hash value and eighth hash value. In embodiments, creating the second value using the seventh hash value and eighth hash value includes hashing a combination of the seventh hash value and eighth hash value to create a ninth hash value, and the second value is based on the ninth hash value.

According to a third aspect, a device for creating verifiable data streams is provided. The device is adapted to: create a first hash value by hashing a combination of a first portion of the data stream and a first metadata associated with a data stream; create a second hash value by hashing a combination of a second portion of the data stream and a second metadata associated with the data stream; create a third hash value by hashing a combination comprising the first hash value and the second hash value; and upload to a database a first verified hash value, wherein the first verified hash value is based on the third hash value.

According to a fourth aspect, a device for verifying data streams is provided. The device is adapted to: receive a first portion of the content; and create a first hash value by hashing a combination of the first portion of the content and the first metadata associated with the content. The device is further adapted to, after receiving the first portion of the content, receive a second portion of the content; and create a second hash value by hashing a combination of the second portion of the content and the second metadata associated with the content. The device is further adapted to create a third hash value by hashing a combination comprising the first hash value and the second hash value. The device is further adapted to obtain a first verified hash value for verifying at least the first and second portions of the content; and compare a first value to the first verified hash value, wherein the first value is based on the third hash value. The device is further adapted to verify the first and second portions of the content as a result of determining that the first value equals the first verified value.

According to a fifth aspect, a device for creating verifiable data streams is provided. The device includes a receiving module configured to receive first and second portions of a data stream and first and second metadata associated with the data stream; and a creating module configured to create a first hash value by hashing a combination of a first portion of the data stream and a first metadata associated with a data stream. The creating module is further configured to create a second hash value by hashing a combination of a second portion of the data stream and a second metadata associated with the data stream. The creating module is further configured to create a third hash value by hashing a combination comprising the first hash value and the second hash value. The device further includes an uploading module configured to upload to a database a first verified hash value. The first verified hash value is based on the third hash value.

According to a sixth aspect, a device for verifying data streams is provided. The device includes a receiving module configured to receive a first portion of the content; and a creating module configured to create a first hash value by hashing a combination of the first portion of the content and the first metadata associated with the content. The receiving module is further configured to, after receiving the first portion of the content, receive a second portion of the content. The creating module is further configured to create a second hash value by hashing a combination of the second portion of the content and the second metadata associated with the content. The creating module is further configured to create a third hash value by hashing a combination comprising the first hash value and the second hash value. The device further includes an obtaining module configured to obtain a first verified hash value for verifying at least the first and second portions of the content. The device further includes a comparing module configured to compare a first value to the first verified hash value, wherein the first value is based on the third hash value; and a verifying module configured to verify the first and second portions of the content as a result of determining that the first value equals the first verified value.

According to a seventh aspect, computer programs for creating verifiable data streams are provided. The computer programs include a computer program, comprising instructions which, when executed on at least one processor, causes the at least one processor to carry out the method according to any one of the disclosed methods for creating verifiable data streams. According to an eighth aspect, carriers for creating verifiable data streams are provided. The carriers include a carrier comprising any one of the disclosed computer programs for creating verifiable data streams, wherein the carrier is one of an electronic signal, optical signal, radio signal or computer readable storage medium.

According to a ninth aspect, computer programs for verifying content are provided. The computer programs include a computer program, comprising instructions which, when executed on at least one processor, causes the at least one processor to carry out the method according to any one of the disclosed methods for creating verifiable data streams. According to a tenth aspect, carriers for verifying content are provided. The carriers include a carrier comprising any one of the disclosed computer programs for verifying content, wherein the carrier is one of an electronic signal, optical signal, radio signal or computer readable storage medium.

### BRIEF DESCRIPTION OF THE DRAWINGS

The accompanying drawings, which are incorporated herein and form part of the specification, illustrate various embodiments.
FIG. 1 illustrates a system according to some embodiments.
FIG. 2 illustrates a flow chart according to some embodiments.
FIG. 3 illustrates a flow chart according to some embodiments.
FIG. 4 illustrates a hash list after several iterations according to some embodiments.
FIGS. 5A and 5B. Illustrates a Merkle tree after several iterations according to some embodiments.
FIG. 6 is a flow chart illustrating a process according to some embodiments.
FIG. 7 is a flow chart illustrating a process according to some embodiments.
FIG. 8 is a diagram showing functional modules of a content-creation device according to some embodiments.
FIG. 9 is a diagram showing functional modules of a content-consumer device according to some embodiments.
FIG. 10 is a block diagram of a content-creation device and/or content-consumer device according to some embodiments.

### DETAILED DESCRIPTION

More and more mobile phones, tablets, laptop computers, and other portable devices are being equipped with cameras, internet connections, GPS, and various other sensors and accessories. The increasing capabilities of today's smartphones enable the end user to produce and distribute media content more easily than before. Video, for example, may be taken nearly anywhere, uploaded, and consumed by others in locations remote from the site of content creation. Besides mobile phones, other sources of data streams include sensors or other devices such as devices that generate data streams in the form of a time series. For example, a location sensor may periodically output location data and corresponding time-stamps, a temperature sensory may produce a time series of temperature values, a web servers produces web log entries in response to events (e.g., requests for content). One issue that has arisen from this is the lack of ability to identify whether content (e.g., video, sensor data, log file records, etc) and its corresponding metadata have been falsified, altered, doctored, modified, and/or forged as compared to the originally created content. Additionally, videos may be taken out of context or claimed to be from a place and/or time different from what might be the truth. It is getting increasingly difficult for the viewer to know what to believe, who to believe, and the tools to help counter these issues are scarce and limited. There is a need to verify the integrity and origin authentication of such data. Data integrity is the property whereby data has not been altered in an unauthorized manner since the time it was created, transmitted, or stored by an authorized source. Data origin authentication is a type of authentication whereby a party is corroborated as the (original) source of specified data created at some time in the past. Typically, data origin authentication includes data integrity and vice versa. The ability to verify such information may be important, for example, to protect individuals or businesses from deceptively edited video, to allow the public to have confidence in videos of public significance (e.g., news events, politics, and so on), and numerous other examples.

Generally, the hashing of a data is used to guarantee the integrity and authentication of a message and "uniquely" represent the data. Hashing is the process of producing hash values for the purpose of accessing data and for security reasons in communication systems. The important thing about a hash value is that it is nearly impossible to derive the original input number without knowing the data used to create the hash value Hashing with regard to security is the technique of taking data, encrypting it, and creating unpredictable, irreversible output. Hashing will take arbitrary input and produce a string with a fixed length. Typically hashing techniques will have the following attributes: - (i) A given known input must always produce one known output; (ii) Once hashing has been done, it should be impossible to go from the output to the input; (iii) Different multiple inputs should give a different output; (iv) Modifying an input should mean a change in the hash. Message Digest 2 (MD2), Message Digest 6 (MD6), Secure Hash Algorithm (SHA), Hashed Message Authentication Code (HMAC etc. are examples of hashing techniques.

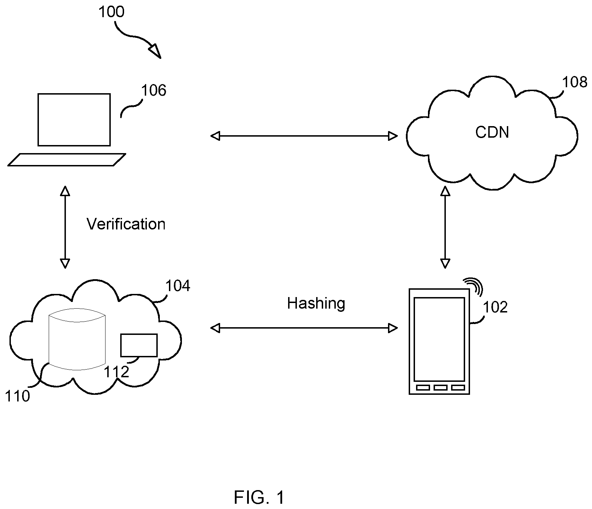

Referring now to FIG. 1, system 100 provides a hashing and verification process that allows for verification of data such as live video streams. Data (e.g., video) may be captured by a content-creation device 102 such as a smartphone, tablet, personal computer, and so forth. During the capture session, for example, the video camera buffers are delivered to the user device's local memory and/or media processing unit (e.g., media muxing unit); then hashed together with associated metadata (e.g., content creator, device identifier, creation time, geolocation, and/or other metadata) to generate verification data; and the verification data is sent to a database system 104 for storage. Database system 104 may be a trusted database system, and may include a database 110. Database system 104 may also include a blockchain ledger and/or smart contract 112. Database 110, blockchain ledger and/or smart contract 112 may be immutable (i.e. data is not modified after being written, so that data is not changed (a/k/a mutated) after being loaded into database). A smart contract operating with database system 104 may append a time-stamp to a received packet before storing the received packet in the database. In embodiments, hashing of the buffer content and metadata may be performed locally on content-creation device 102 or by other devices and/or servers (e.g., a trusted server receiving data in real-time from device 102).

Once data is captured (or while it is being captured), the data may be uploaded to a content distribution network (CDN) such as CDN 108. For example, video content may be uploaded to CDN 108, a social media site, distributed as live media, or otherwise shared with users. The video (or other content) together with its associated metadata may then be accessed by an end user on content-consumer device 106, e.g., from the social media platform or content distribution system, and verified (e.g., through the web client on content-consumer device 106) according to various embodiments. In embodiments, verification by content-consumer device 106 involves communication with the database system 104 (e.g., to receive verification data by which the video or other content may be verified).

A web client on content-consumer device 106 may be connected to database system 104. To verify content and the associated metadata, the content and associated metadata in need of verification is provided to the web client (e.g., via CDN 108). The web client essentially mirrors the hashing procedure performed upon content ingestion (e.g., as performed by the content-creation device 102 or a server). For example, verification emulates what the smartphone did when filming the video in a backwards order and breaks down the video into smaller predetermined buffer sizes. Because verification mirrors the process performed at video creation time, the web client may need to know certain parameters that were used to hash the content and associated metadata. As one example, one parameter may be to identify the hashing function or functions to be used (e.g., SHA-256, MD6, Pearson hashing, Fletcher checksum). Another example may be a time interval or buffer size associated with the hashing procedure. In some embodiments, these parameters may be fixed by the web client, provided to the web client by the user, provided to the web client as part of the metadata, or otherwise known to the web client.

The web client may request verification data from the database system 104 associated with the content and associated metadata. This request may be based on a content identifier, time intervals specified by the user of the web client, or other information known to the web client. During the verification process, the web client hashes the metadata and content and compares the newly created hashes with the hashes obtained from the database system 104. Depending on the comparison, the video is either verified or not. In embodiments, segments of the video can be individually verified. This is advantageous since, for example, there might exist some perturbing factors when live streaming a video (e.g., dropped packets, misread bits, noise, and so on). Embodiments also account for adaptive bitrate streaming, and other streaming schemes, by providing as appropriate multiple sets of verification data (e.g., verification data at different bitrates).

In some embodiments, content-generation device 102 may be a sensor, such as, for example, a GPS sensor, a temperature sensor, a water-level sensor, and so on. Data streams may, in some embodiments, be time series of data generated by content-generation device 102. For example, GPS data/location data, temperatures, water levels, and so on, may be an example of a data stream. Another example may be log files generated by cloud servers. Although the disclosure uses video as an example embodiment, other embodiments are within the scope of the present disclosure. In some embodiments, content-generation device 102 may not be a single device, but could instead be a network of such devices. For example, a network of underwater sonar sensors could generate a time-series of data where each time point includes data from one or more of the networked sensors. As another example, lighting devices (e.g., individual LEDs) may be each generate usage data (e.g., on/off state), and a network of such devices may generate a time-series of data where each point includes data from one or more light devices (e.g., within a home, business, city block, and so on).

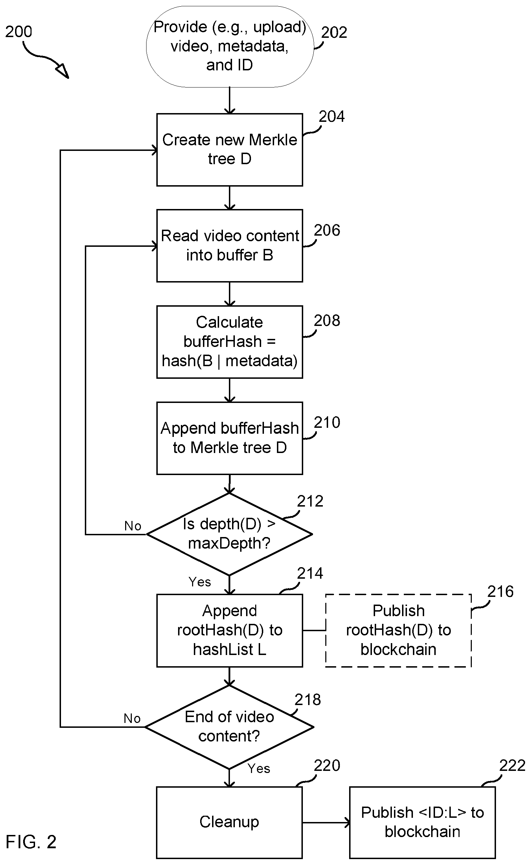

FIG. 2 is a flow chart illustrating a process 200 according to embodiments. Process 200 may be used for providing verification data such that content may be verified by parties later accessing such content. Process 200 may be performed locally on a content-creation device 102, or by a server or other device capable of performing the required steps. For example, remote sensors may relay data back to a central server, and the central server may perform process 200 to provide verification data. For instance, traffic cameras (e.g., for catching speeders or those running a red light or otherwise for surveillance) may not have sufficient processing power or storage to run process 200 themselves, but can allow for remote servers to do so. Such verification could then be used in court to verify the integrity of the video.

Process 200 begins with providing a content stream (e.g., video stream) and metadata (at 202). This may also include an identifier associated with the video. Such content may be provided by local camera buffers, or it may be received from a remote device. It is understood that metadata may remain constant for the content in some embodiments, and in other embodiments metadata may vary for different portions (e.g., chunks, segments, frames) of content. For example, chunk-specific metadata may include one or more of a chunk identifier (e.g., frame number) and a location identifier (e.g., GPS coordinate) indicating for example a geolocation where the chunk started. Chunk-specific metadata may also include (in some embodiments) a content-wide metadata section that remains static for the entirety of the content. In embodiments where content is generated by a mobile device, different chunks may have different location identifiers. In some embodiments, including a chunk identifier such as a frame number may also serve to establish a chronology which will tell the system in which order the hashes are created in, and will help to prevent scrambling of the hashes as they are uploaded. Chunk-specific metadata may also indicate where a chunk starts or stops in relation to a certain content encoding scheme (for example that a chunk starts at a first frame and ends at a second frame).

In embodiments, metadata (including chunk-specific metadata) may include a cryptographic signature (e.g., an Elliptic Curve Digital Signature Algorithm (ECDSA) signature, an Rivest-Shamir-Adleman (RSA) signature). Using an ECDSA signature as metadata makes it possible in some embodiments to derive a public key and verify the public key from another source. This may further increase the integrity of the content being verified. In embodiments where cryptographic signatures are used, content-creation device 102 may generate the signature using a private key that only content-creation device 102 has access to. Subsequent to generation of the signature, device 102 may then add it to the metadata using an appropriate protocol. This scheme has several benefits. For example, it requires less computation (e.g., it is much easier to compute hashes compared to RSA or ECDSA signatures). In some embodiments, the signature may only need to be calculated once. Alternatively, the signature may be generated for every data created by content-generation device 102, but this would increase bandwidth utilization and most likely also drain batteries.

Process 200 then enters into a loop, during which the content stream is processed until there is some indication that the end of the content stream has been reached (e.g., an end-of-file (EOF) bit) (outer loop at 204-218). This loop involves creation of a new Merkle tree D (at 204). The Merkle tree D is then populated by another loop (inner loop at 206-212). Content (e.g., video) is read into a buffer B (at 206). In some embodiments, reading content into buffer B includes reading a fixed number of bytes (up until the EOF marker). In other embodiments, such as where the content comprises MPEG-encoded video data, reading content into buffer B may include reading a current I-frame up until (but not including) the next I-frame.

In embodiments where content is being processed as it is being created, or as it is being streamed, flow may hang at this step, for example by use of a blocking read operation, if no more content is available to be read into buffer B (but no EOF has been reached). On the other hand, in some embodiments, if no more content is available to be read into buffer B (and an EOF has been reached), then if buffer B is empty, flow may proceed to cleanup at step 220, and if buffer B is not empty, flow may proceed to steps 208, 210, and then short-circuit decision 212 and proceed to step 214.

Following reading content into buffer B at 206, a value (called "bufferHash" in FIG. 2) is calculated by hashing a combination of the buffer B with the metadata (at 208). The pipe "|" symbol in FIG. 2 indicates the append or concatenate operation; that is, "B | metadata" indicates that the metadata is appended to the buffer B. In some embodiments, the combination of the buffer B and metadata that are hashed may include appending the metadata to the buffer B, or other operations such as bitwise exclusive-or (xor) of buffer B with the metadata. As stated above, the "metadata" referred to here may be (in some embodiments) static, content-wide metadata, or it may refer to (in other embodiments) dynamic, chunk-specific metadata. Once the value ("bufferHash") is calculated, it is appended to Merkle tree D (at 210). This appending step is described in more detail below. Next a determination is made as to whether the depth of the Merkle tree D exceeds a maximum depth (which may be a configuration parameter) (at 212). If not, then flow returns to step 206 (where buffer B is overwritten). If so, then the hash value in the root of tree D (referred to as "rootHash(D)") is appended to a hash list L (at 214). Optionally, this value rootHash(D) may be published to the blockchain or database system (at 216). Publishing while the video is still being processed may facilitate earlier verification where live streaming is being performed.

Following step 214 (and optional step 216), a determination is made as to whether the end of the content has been reached (at 218). If not, then flow returns to step 204 (where Merkle tree D may be recycled/recreated). If so, then some administrative cleanup may be needed (at 220). For example, in some embodiments, if Merkle tree D is non-empty at this point, then rootHash(D) is appended to hash list L (analogous to step 214). Following any necessary cleanup, the hash list L is published to the blockchain or database system (at 222). For example, the hash list L may be published as a pair with the video identifier provided at step 202.

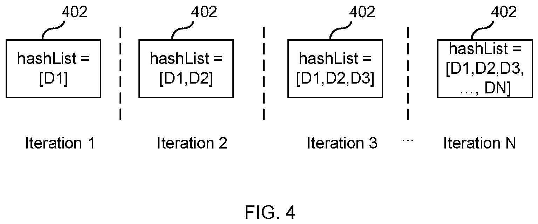

The hash list L and Merkle tree D referred to above in process 200 will now be described. Referring now to FIG. 4, hash list 402 (e.g., hash list L) is illustrated as process 200 goes through several iterations (referring here to iterations through the "outer loop" steps 202-214). At the first iteration hash list 402 includes a single entry D1 (e.g., the root hash of a first Merkle tree D). At the second iteration, hash list 402 includes two entries D1, D2. At the third iteration, hash list 402 includes three entries D1, D2, D3. After N iterations, hash list 402 includes N entries. Each such entry corresponds to a root hash of a different Merkle tree.

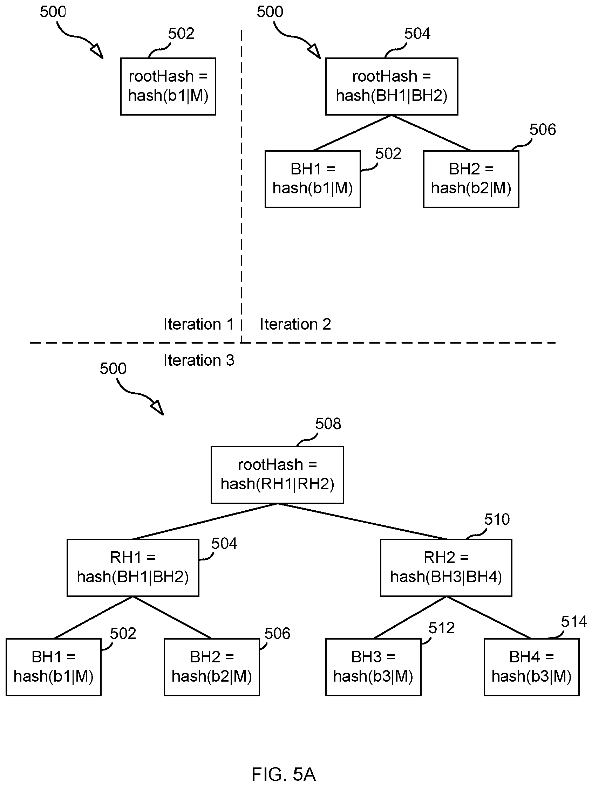

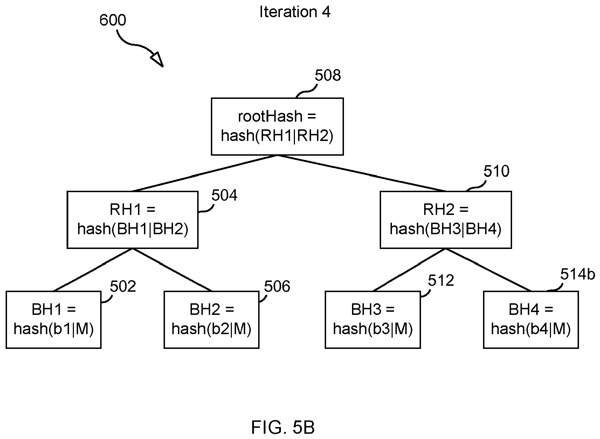

A Merkle tree is a tree in which every non-leaf node is labelled with the hash of the labels or values (in case of leaves) of its child nodes. Referring now to FIGS. 5A-5B, evolution of a Merkle tree 500 (e.g., Merkle tree D) is illustrated as process 200 goes through several iterations (referring here to iterations through the "inner loop" steps 206-212). FIGS. 5A-5B present one option for the appending operation performed at step 210. As shown in FIGS. 5A-5B, a valid Merkle tree is maintained at each iteration.

At the end of iteration 1, tree 500 has one node, including one leaf node, and has depth 0. Buffer hash rootHash=hash(b1|M) is being appended to the tree. Because this is iteration 1, the tree is empty beforehand. Therefore, to do this append operation, root node 502 is created. Root node 502 has the value rootHash.

At the end of iteration 2, tree 500 has three nodes, including two leaf nodes, and has depth 1. Buffer hash BH2=hash(b2|M) is being appended to the tree. To do this append operation, a new root node 506 is created. New root node 504 has as its left descendants, the old root 502; and as its right descendants, a new node 506 having the value BH2. The new root node 504 has a value that is calculated by hashing a combination of its immediate descendants (here, nodes 502 and 506).

At the end of iteration 3, tree 500 has seven nodes, including four leaf nodes, and has depth 2. Buffer hash BH3=hash(b3|M) is being appended to the tree. To do this append operation, a new root node 508 is created. New root 508 has as its left descendants, the old root 504 (and children); and as its right descendants, a new node 510 (and children). In order to maintain a balanced tree of depth 2, node 510 is given two children. Its left child, node 512 is given the value BH3. Its right child, node 514 is also given value BH3 (any other dummy value would also be appropriate). Once the leaf nodes have been finished, then the parent node 510 can be calculated; its value is calculated by hashing a combination of its immediate descendants (here, nodes 512 and 514). Once parent node 510 has been finished, new root node 508 can be calculated; its value is calculated by hashing a combination of its immediate descendants (here, nodes 504 and 510).

At the end of iteration 4, tree 500 has seven nodes, including four leaf nodes, and has depth 2. Buffer hash BH4=hash(b4|M) is being appended to the tree. Here, no new nodes need to be added to the tree. Instead, to do this append operation, the dummy value used in node 514 may be updated to be the value BH4 (see updated node 514b). Once updated, all parents of node 514 must likewise be updated. Thus, parent 510 is recalculated, and root 508 is recalculated as well (in each case, the non-leaf nodes are calculated by hashing a combination of their immediate descendants).

Iterations 5 and on are not shown, but it should be apparent how to continue the append operation through N iterations. For a given max depth of *n,* a finished Merkle tree will have 2*ⁿ* leaves. Another option for the append operation is to wait until 2*ⁿ* data buffers B have been read in the inner loop (steps 206-212) (or until an end-of-stream or end-of-file indication), and then to generate the full tree. This lazy evaluation may require less updates of the Merkle tree (since each node is calculated once, instead of having to recalculate the dummy nodes as described above).

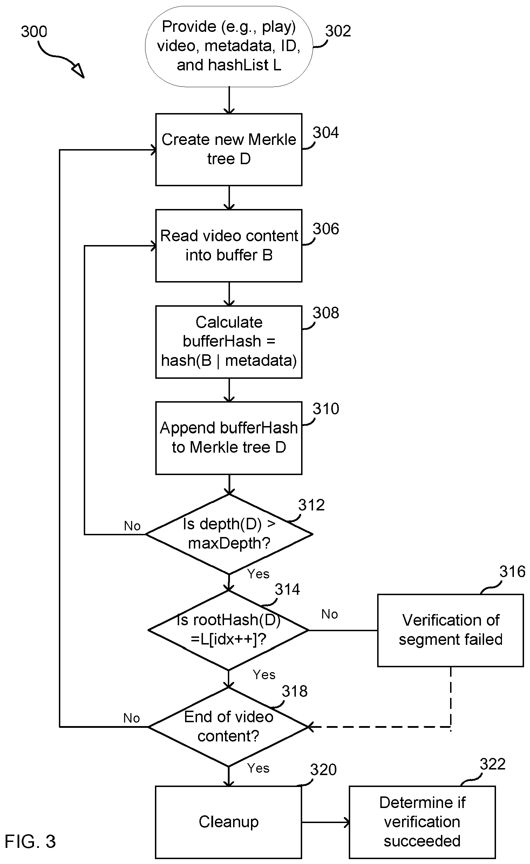

FIG. 3 is a flow chart illustrating a process 300 according to embodiments. Process 300 may be used for verifying content by parties, including content such as a video stream over a social media website or otherwise. In some embodiments, the content is received from a content source and the content comprises one or more of video data, audio data, text (e.g., ascii data). Process 300 may be performed locally on a content-consumer device 106, or by a server or other device capable of performing the required steps.

Process 300 begins with providing content, metadata, and verification data (at 302). This may also include an identifier associated with the video. Such content may be obtained from content distribution networks. In embodiments, verification data may be continually being provided, and in embodiments, such verification data may be requested on an as-needed basis, or pushed to the processing device when the data is available. For example, if the content is a live video stream, the complete set of verification data may not be available at the time that playback begins. As explained above, regarding process 200, it is understood that metadata may remain constant for the content in some embodiments, and in other embodiments metadata may vary for different portions (e.g., chunks, segments, frames) of content. Likewise, metadata and/or chunk-specific metadata as used in process 300 is analogous to its use in process 200.

Process 300 then enters into a loop, during which the video is processed until there is some indication that the end of the video stream has been reached (e.g., an end-of-file (EOF) bit) (outer loop at 304-318). This loop involves creation of a new Merkle tree D (at 304). The Merkle tree D is then populated by another loop (inner loop at 306-312). Content (e.g., video) is read into a buffer B (at 306). In some embodiments, reading content into buffer B includes reading a fixed number of bytes (up until the end of stream marker). In other embodiments, such as where the content comprises MPEG-encoded video data, reading content into buffer B includes reading a current I-frame up until (but not including) the next I-frame.

In embodiments where content is being processed as it is being created, or as it is being streamed, flow may hang at this step, for example by use of a blocking read operation, if no more content is available to be read into buffer B (but no EOF has been reached). On the other hand, in some embodiments, if no more content is available to be read into buffer B (and an EOF has been reached), then if buffer B is empty, flow may proceed to cleanup at step 320, and if buffer B is not empty, flow may proceed to steps 308, 310, and then short-circuit decision 312 and proceed to step 314.

Following reading content into buffer B at 306, a value (called "bufferHash" in FIG. 3) is calculated by hashing a combination of the buffer B with the metadata (at 308). The pipe "|" symbol in FIG. 3 (as in FIG. 2 and elsewhere) indicates the append or concatenate operation; that is, "B | metadata" indicates that the metadata is appended to the buffer B. In some embodiments, the combination of the buffer B and metadata that are hashed may include appending the metadata to the buffer B, or other operations such as bitwise exclusive-or (xor) of buffer B with the metadata. As stated above, the "metadata" referred to here may be (in some embodiments) static, content-wide metadata, or it may refer to (in other embodiments) dynamic, chunk-specific metadata. Once the value ("bufferHash") is calculated, it is appended to Merkle tree D (at 310). This appending step is analogous to that described with respect to step 210 of process 200. Next a determination is made as to whether the depth of the Merkle tree D exceeds a maximum depth (which may be a configuration parameter) (at 312). If not, then flow returns to step 306 (where buffer B is overwritten). If so, then a comparison is made (at 314). Particularly, the hash value in the root of tree D (referred to as "rootHash(D)") is compared to the respective verified hash value in hash list L. As explained above, hash list L may be provided at step 302, in some embodiments, and in other embodiments may be provided on demand as needed or as it is being created in a corresponding instance of process 200.

In some embodiments, a running index ("idx") may be kept, starting at 0, and being incremented by 1 at each comparison ("idx++"), so that the appropriate hash in list L can be obtained. In other embodiments, list L may be implemented as a queue, and items are popped or de-queued as they are accessed for comparison. In some embodiments, some other segment identifier may be used to access the appropriate verified hash value.

If the comparison at 314 results in the values not matching, then verification has failed (at 316). In embodiments, failure to verify at step 316 means that verification failed for a particular segment (e.g., corresponding to the data that had been read into buffer B for the inner loop at steps 306-312). In such cases, process 300 may either end (indicating that verification has failed), or process 300 may continue (indicating that verification of a segment has failed). If process 300 is performed concurrently with a user playing the content, then some indication may be presented to the user to indicate the failure (e.g., a visible watermark on video, a red outline, a warning sound, etc.). If the process 300 continues after a segment fails, a list of failed segments may be kept in some embodiments.

If the comparison at 314 results in the values matching, then verification of the segment has succeeded. If process 300 is performed concurrently with a user playing content, then some indication may be presented to indicate the success (e.g., a visible watermark on the video, a green outline, a sound indicating successful verification).

Following a match at comparison 314, or upon continuing after a segment fails at 316, a determination is made as to whether the end of the content has been reached (at 318). If not, then flow returns to step 304 (where Merkle tree D may be recycled/recreated). If so, then some administrative cleanup may be needed (at 320). For example, in some embodiments, if Merkle tree D is non-empty at this point, then rootHash(D) is compared to the respective verified hash value (analogous to comparison at 314). As at 314, if the result of the comparison is a match, then verification of the last segment succeeded, and if the result is not a match, then verification of the last segment failed. Following any necessary cleanup, a determination is made as to whether verification succeeded (at 322). For example, if every segment verified successfully, then the content is verified. On the other hand, if some segments failed to verify, then the content is not verified. In some embodiments, a score may be computed indicating the level of verification (e.g., 0% of content verified, 20% of content verified, 80% of content verified). In cases where less than all of the segments fail to verify, then it is highly probable that at least the metadata is correct. In cases where all the segments fail to verify, it could be the case that the metadata has been altered, or that the metadata is correct but each individual segment is altered from the original.

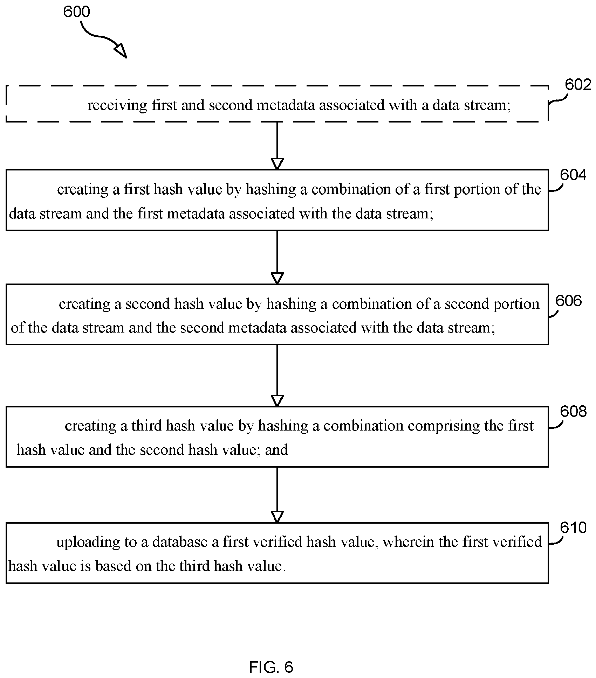

FIG. 6 shows a flow diagram illustrating a process 600 according to some embodiments. Process 600 is a method for creating verifiable data streams. The method includes receiving first and second metadata associated with a data stream (step 602). The method further includes creating a first hash value by hashing a combination of a first portion of the data stream and the first metadata associated with the data stream (step 604). The method further includes creating a second hash value by hashing a combination of a second portion of the data stream and the second metadata associated with the data stream (step 606). The method further includes creating a third hash value by hashing a combination comprising the first hash value and the second hash value (step 608). The method further includes uploading to a database a first verified hash value, wherein the first verified hash value is based on the third hash value (step 610).

In some embodiments, the first and second metadata are the same metadata, while in other embodiments, the first and second metadata are different metadata. In some embodiments, the first metadata include one or more of (i) a first location information and (ii) a first frame identifier, and the second metadata include one or more of (i) a second location information and (ii) a second frame identifier.

In embodiments, the first verified hash is the third hash value.

In embodiments, the method further includes (1) creating a fourth hash value by hashing a combination of a third portion of the data stream and a third metadata associated with the data stream; (2) creating a fifth hash value by hashing a combination of a fourth portion of the data stream and a fourth metadata associated with the data stream; and (3) creating a sixth hash value by hashing a combination comprising the fourth hash value and the fifth hash value. The first verified hash value is based on the third hash value and the sixth hash value.

In embodiments, the method includes creating the first verified hash value, and creating the first verified hash value includes hashing a combination of the third hash value and the sixth hash value.

In embodiments, the method further includes (1) obtaining N additional portions of the data stream, wherein N is a whole number > 1; (2) creating a second verified hash value for use in verifying the group of N additional portions of the data stream; and (3) uploading to the database the second verified hash value. In embodiments, obtaining the N additional portions of the data stream includes obtaining a fifth portion of the data stream and a sixth portion of the data stream. In embodiments, creating the second verified hash value for use in verifying the group of N additional portions of the data stream includes (1) creating a seventh hash value by hashing a combination of the fifth portion of the data stream and a fifth metadata associated with the data stream; (2) creating an eighth hash value by hashing a combination of the sixth portion of the data stream and a sixth metadata associated with the data stream; and (3) creating the second verified hash value using the seventh hash value and eighth hash value. In embodiments, creating the second verified hash value using the seventh hash value and eighth hash value includes hashing a combination of the seventh hash value and eighth hash value to create a ninth hash value, and the second verified hash value is based on the ninth hash value.

In embodiments, the data stream includes MPEG encoded data; and each said portion of the data stream includes not more than one MPEG I-frame. In other embodiments, the data stream includes MPEG encoded data; and each said portion of the data stream includes more than one MPEG I-frame. In embodiments, the data stream includes a time series of sensor data. In still other embodiments, other video encoding formats are utilized. In some embodiments, the first and/or second verified hash value is obtained from a root of a Merkle tree, such that leaf nodes of the Merkle tree are values obtained by hashing a combination of a respective portion of the data stream and respective metadata associated with the data stream, and non-leaf nodes of the Merkle tree are values obtained by hashing a combination of direct children of the respective non-leaf node. For example, process 200 (see FIG. 2) is an example of using Merkle trees to generate first and/or second verified hash value.

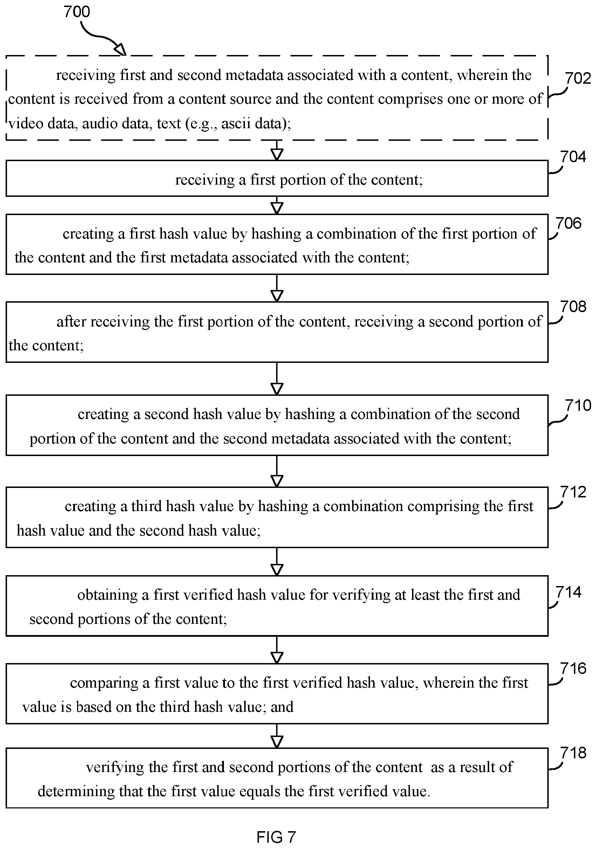

FIG. 7 shows a flow diagram illustrating a process 700 according to some embodiments. Process 700 is a method for verifying data streams. The method includes receiving first and second metadata associated with a content (step 702); and receiving a first portion of the content (step 704). The method further includes creating a first hash value by hashing a combination of the first portion of the content and the first metadata associated with the content (step 706). The method further includes, after receiving the first portion of the content, receiving a second portion of the content (step 708). The method further includes creating a second hash value by hashing a combination of the second portion of the content and the second metadata associated with the content (step 710). The method further includes creating a third hash value by hashing a combination comprising the first hash value and the second hash value (step 712). The method further includes obtaining a first verified hash value for verifying at least the first and second portions of the content (step 714). The method further includes comparing a first value to the first verified hash value (step 716). The first value is based on the third hash value. The method further includes verifying the first and second portions of the content as a result of determining that the first value equals the first verified value (step 718).

In some embodiments, the first and second metadata are the same metadata, while in other embodiments, the first and second metadata are different metadata. In some embodiments, the first metadata include one or more of (i) a first location information and (ii) a first frame identifier, and the second metadata include one or more of (i) a second location information and (ii) a second frame identifier.

In some embodiments, the first value is the third hash value.

In some embodiments, the method further includes, (1) after receiving the second portion of the content, receiving a third portion of the content; (2) creating a fourth hash value by hashing a combination of a third portion of the content and a third metadata associated with the content; (3) after receiving the third portion of the content, receiving a fourth portion of the content; (4) creating a fifth hash value by hashing a combination of a fourth portion of the content and a fourth metadata associated with the content; and (5) creating a sixth hash value by hashing a combination comprising the fourth hash value and the fifth hash value associated with the content. The first value is based on the third hash value and the sixth hash value, and verifying the first and second portions of the content as a result of determining that the first value equals the first verified value further includes verifying the third and fourth portions of the content.

In embodiments, the method includes creating the first value, and creating the first value includes hashing a combination of the third hash value and the sixth hash value.

In embodiments, the method further includes (1) obtaining N additional portions of the content, wherein N is a whole number > 1; (2) obtaining a second verified hash value for use in verifying the group of N additional portions of the content; (3) creating a second value based on the N additional portions of the content; (4) comparing the second value to the second verified hash value; and (5) verifying the N additional portions of the content as a result of determining that the second value equals the second verified value. In embodiments, obtaining the N additional portions of the content includes obtaining a fifth portion of the content and a sixth portion of the content. In embodiments, creating the second value includes (1) creating a seventh hash value by hashing a combination of the fifth portion of the content and a fifth metadata associated with the content; (2) creating an eighth hash value by hashing a combination of the sixth portion of the content and a sixth metadata associated with the content; and (3) creating the second value using the seventh hash value and eighth hash value. In embodiments, creating the second value using the seventh hash value and eighth hash value includes hashing a combination of the seventh hash value and eighth hash value to create a ninth hash value, and the second value is based on the ninth hash value.

In embodiments, the content includes MPEG encoded data; and each said portion of the content includes not more than one MPEG I-frame. In other embodiments, the content includes MPEG encoded data; and each said portion of the data stream includes more than one MPEG I-frame. In still other embodiments, other video encoding formats are utilized. In embodiments, the content includes a time-series of sensor data. In some embodiments, the first and/or second value is obtained from a root of a Merkle tree, such that leaf nodes of the Merkle tree are values obtained by hashing a combination of a respective portion of the data stream and respective metadata associated with the data stream, and non-leaf nodes of the Merkle tree are values obtained by hashing a combination of direct children of the respective non-leaf node. For example, process 300 (see FIG. 3) is an example of using Merkle trees to generate first and/or second values to compare against respective verified hash values.

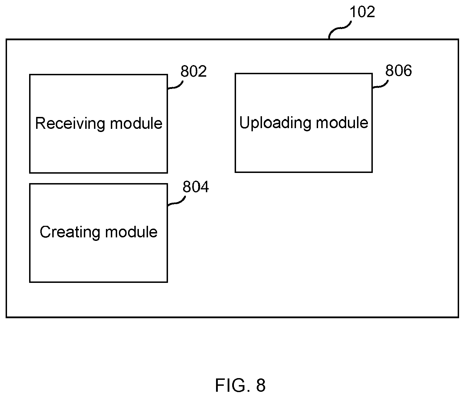

FIG. 8 is a diagram showing functional modules of content-creation device 102 according to some embodiments. As shown in FIG. 8, content-creation device 102 includes a receiving module 802, a creating module 804, and an uploading module 806. Receiving module 802 is configured to receive first and second metadata associated with a data stream. Creating module 804 is configured to create a first hash value by hashing a combination of a first portion of the data stream and the first metadata associated with the data stream; and to create a second hash value by hashing a combination of a second portion of the data stream and the second metadata associated with the second data stream. Creating module 804 is further configured to create a third hash value by hashing a combination including the first hash value and the second hash value. Uploading module 806 is configured to upload to a database a first verified hash value. The first verified hash value is based on the third hash value.

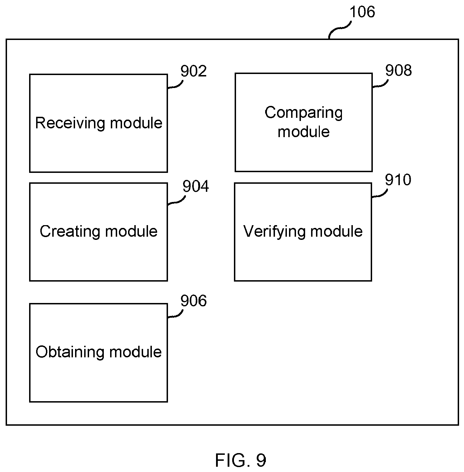

FIG. 9 is a diagram showing functional modules of content-consumer device 106 according to some embodiments. As shown in FIG. 9, content-consumer device 106 includes a receiving module 902, a creating module 904, an obtaining module 906, a comparing module 908, and a verifying module 910. Receiving module 902 is configured to receive first and second metadata associated with a content; and to receive a first portion of the content. Creating module 904 is configured to create a first hash value by hashing a combination of the first portion of the content and the first metadata associated with the content. Receiving module 902 is further configured to, after receiving the first portion of the content, receive a second portion of the content. Creating module 904 is further configured to create a second hash value by hashing a combination of the second portion of the content and the second metadata associated with the content; and create a third hash value by hashing a combination including the first hash value and the second hash value. Obtaining module 906 is configured to obtain a first verified hash value for verifying at least the first and second portions of the content. Comparing module 908 is configured to compare a first value to the first verified hash value. The first value is based on the third hash value. Verifying module 910 is configured to verify the first and second portions of the content as a result of determining that the first value equals the first verified value.

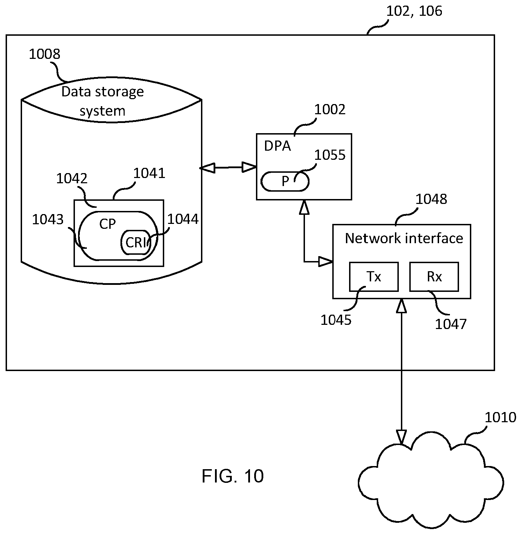

FIG. 10 is a block diagram of content-creation device 102 and/or content-consumer device 106 according to some embodiments. As shown in FIG. 10, device 102 and/or 106 may comprise: a data processing apparatus (DPA) 1002, which may include one or more processors (P) 1055 (e.g., a general purpose microprocessor and/or one or more other processors, such as an application specific integrated circuit (ASIC), field-programmable gate arrays (FPGAs), and the like); a network interface 1048 comprising a transmitter (Tx) 1045 and a receiver (Rx) 1047 for enabling device 102 and/or 106 to transmit data to and receive data from other nodes connected to a network 1010 (e.g., an Internet Protocol (IP) network) to which network interface 1048 is connected; circuitry 1003 (e.g., radio transceiver circuitry) coupled to an antenna system 1004 for wireless communication with UEs); and local storage unit (a.k.a., "data storage system") 1008, which may include one or more non-volatile storage devices and/or one or more volatile storage devices (e.g., random access memory (RAM)). In embodiments where device 102 and/or 106 includes a general purpose microprocessor, a computer program product (CPP) 1041 may be provided. CPP 1041 includes a computer readable medium (CRM) 1042 storing a computer program (CP) 1043 comprising computer readable instructions (CRI) 1044. CRM 1042 may be a non-transitory computer readable medium, such as, but not limited, to magnetic media (e.g., a hard disk), optical media, memory devices (e.g., random access memory), and the like. In some embodiments, the CRI 1044 of computer program 1043 is configured such that when executed by data processing apparatus 1002, the CRI causes device 102 and/or 106 to perform steps described above (e.g., steps described above with reference to the flow charts). In other embodiments, device 102 and/or 106 may be configured to perform steps described herein without the need for code. That is, for example, data processing apparatus 1002 may consist merely of one or more ASICs. Hence, the features of the embodiments described herein may be implemented in hardware and/or software.

While various embodiments of the present disclosure are described herein (including the appendices, if any), it should be understood that they have been presented by way of example only, and not limitation. Thus, the breadth and scope of the present disclosure should not be limited by any of the above-described exemplary embodiments. Moreover, any combination of the above-described elements in all possible variations thereof is encompassed by the disclosure unless otherwise indicated herein or otherwise clearly contradicted by context.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method for creating verifiable data streams, the method being performed by a device and comprising:
creating a first hash value by hashing a combination of a first portion of the data stream and a first metadata associated with a data stream (604);
creating a second hash value by hashing a combination of a second portion of the data stream and a second metadata associated with the data stream (606);
creating a third hash value by hashing a combination comprising the first hash value and the second hash value (608); and
uploading to a database (104) a first verified hash value, wherein the first verified hash value is based on the third hash value (610).

2. The method of claim 1, wherein the first metadata is identical to the second metadata or different than the second metadata.

3. The method of claim 1, wherein the first metadata comprises one or more of (i) a first location information and (ii) a first frame identifier, and wherein the second metadata comprises one or more of (i) a second location information and (ii) a second frame identifier.

4. The method of claim 1, further comprising:
creating a fourth hash value by hashing a combination of a third portion of the data stream and a third metadata associated with the data stream;
creating a fifth hash value by hashing a combination of a fourth portion of the data stream and a fourth metadata associated with the data stream;
creating a sixth hash value by hashing a combination comprising the fourth hash value and the fifth hash value; and
creating the first verified hash value, wherein creating the first verified hash value comprises hashing a combination of the third hash value and the sixth hash value.

5. The method of any one of claims 1- 4, further comprising:
obtaining N additional portions of the data stream, wherein N is a whole number > 1;
creating a second verified hash value for use in verifying the group of N additional portions of the data stream; and
uploading to the database (104) the second verified hash value.

6. The method of claim 5, wherein
obtaining the N additional portions of the data stream comprises obtaining a fifth portion of the data stream and a sixth portion of the data stream, and
creating the second verified hash value for use in verifying the group of N additional portions of the data stream comprises:
creating a seventh hash value by hashing a combination of the fifth portion of the data stream and a fifth metadata associated with the data stream;
creating an eighth hash value by hashing a combination of the sixth portion of the data stream and a sixth metadata associated with the data stream; and
creating the second verified hash value using the seventh hash value and the eighth hash value comprises hashing a combination of the seventh hash value and the eighth hash value to create a ninth hash value, and
the second verified hash value is based on the ninth hash value.

7. A method for verifying content, the method being performed by a device and comprising:
receiving a first portion of the content (704);
creating a first hash value by hashing a combination of the first portion of the content and a first metadata associated with the content (706);
after receiving the first portion of the content, receiving a second portion of the content (708);
creating a second hash value by hashing a combination of the second portion of the content and a second metadata associated with the content (710);
creating a third hash value by hashing a combination comprising the first hash value and the second hash value (712);
obtaining a first verified hash value for verifying at least the first and second portions of the content (714);
comparing a first value to the first verified hash value, wherein the first value is based on the third hash value (716); and
verifying the first and second portions of the content as a result of determining that the first value equals the first verified value (718).

8. The method of claim 7, wherein the first metadata is identical to the second metadata or different than the second metadata.

9. The method of claim 7, wherein the first metadata include one or more of (i) a first location information and (ii) a first frame identifier, and wherein the second metadata include one or more of (i) a second location information and (ii) a second frame identifier.

10. The method of claim 7, further comprising:
after receiving the second portion of the content, receiving a third portion of the content;
creating a fourth hash value by hashing a combination of a third portion of the content and a third metadata associated with the content;
after receiving the third portion of the content, receiving a fourth portion of the content;
creating a fifth hash value by hashing a combination of a fourth portion of the content and a fourth metadata associated with the content;
creating a sixth hash value by hashing a combination comprising the fourth hash value and the fifth hash value; and
creating the first value, wherein creating the first value comprises hashing a combination of the third hash value and the sixth hash value,
wherein verifying the first and the second portions of the content as a result of determining that the first value equals the first verified value further comprises verifying the third and fourth portions of the content.

11. The method of any one of claims 7-10, further comprising:
obtaining N additional portions of the content, wherein N is a whole number > 1;
obtaining a second verified hash value for use in verifying the group of N additional portions of the content;
creating a second value based on the N additional portions of the content;
comparing the second value to the second verified hash value; and
verifying the N additional portions of the content as a result of determining that the second value equals the second verified value.

12. The method of claim 11, wherein
obtaining the N additional portions of the content comprises obtaining a fifth portion of the content and a sixth portion of the content, and
creating the second value comprises:
creating a seventh hash value by hashing a combination of the fifth portion of the content and a fifth metadata associated with the content;
creating an eighth hash value by hashing a combination of the sixth portion of the content and a sixth metadata associated with the content; and
creating the second value using the seventh hash value and eighth hash value comprises hashing a combination of the seventh hash value and eighth hash value to create a ninth hash value, and
the second value is based on the ninth hash value.

13. A device (102) for creating verifiable data streams, the device (102) being adapted to:
create a first hash value by hashing a combination of a first portion of the data stream and a first metadata associated with a data stream (604);
create a second hash value by hashing a combination of a second portion of the data stream and a second metadata associated with the data stream (606);
create a third hash value by hashing a combination comprising the first hash value and the second hash value (608); and
upload to a database (104) a first verified hash value, wherein the first verified hash value is based on the third hash value (610).

14. A device (106) for verifying content, the device (106) being adapted to:
receive a first portion of the content (704);
create a first hash value by hashing a combination of the first portion of the content and a first metadata associated with the content (706);
after receiving the first portion of the content, receive a second portion of the content (708);
create a second hash value by hashing a combination of the second portion of the content and a second metadata associated with the content (710);
create a third hash value by hashing a combination comprising the first hash value and the second hash value (712);
obtain a first verified hash value for verifying at least the first and second portions of the content (714);
compare a first value to the first verified hash value, wherein the first value is based on the third hash value (716); and
verify the first and second portions of the content as a result of determining that the first value equals the first verified value (718).

15. A computer program, comprising instructions which, when executed on at least one processor, causes the at least one processor to carry out the method according to any one of claims 1 to 6.

16. A computer program, comprising instructions which, when executed on at least one processor, causes the at least one processor to carry out the method according to any one of claims 7 to 12.

17. A carrier comprising the computer program of claim 15 or 16, wherein the carrier is one of an electronic signal, optical signal, radio signal or computer readable storage medium.

## Patentansprüche

1. Verfahren zum Erstellen verifizierbarer Datenströme, wobei das Verfahren durch eine Vorrichtung durchgeführt wird, und umfassend:
Erstellen eines ersten Hash-Werts durch Hashen einer Kombination eines ersten Teils des Datenstroms und erster Metadaten, die mit einem Datenstrom verknüpft sind (604);
Erstellen eines zweiten Hash-Werts durch Hashen einer Kombination eines zweiten Teils des Datenstroms und zweiter Metadaten, die mit dem Datenstrom verknüpft sind (606);
Erstellen eines dritten Hash-Werts durch Hashen einer Kombination, die den ersten Hash-Wert und den zweiten Hash-Wert umfasst (608); und
Hochladen eines ersten verifizierten Hash-Werts auf eine Datenbank (104), wobei der erste verifizierte Hash-Wert auf dem dritten Hash-Wert basiert (610).

2. Verfahren nach Anspruch 1, wobei die ersten Metadaten mit den zweiten Metadaten identisch sind oder sich von den zweiten Metadaten unterscheiden.

3. Verfahren nach Anspruch 1, wobei die ersten Metadaten eines oder mehrere von (i) ersten Stelleninformationen und (ii) einer ersten Rahmenkennung umfassen und wobei die zweiten Metadaten eines oder mehrere von (i) zweiten Stelleninformationen und (ii) einer zweiten Rahmenkennung umfassen.

4. Verfahren nach Anspruch 1, weiter umfassend:
Erstellen eines vierten Hash-Werts durch Hashen einer Kombination eines dritten Teils des Datenstroms und dritter Metadaten, die mit dem Datenstrom verknüpft sind;
Erstellen eines fünften Hash-Werts durch Hashen einer Kombination eines vierten Teils des Datenstroms und vierter Metadaten, die mit dem Datenstrom verknüpft sind;
Erstellen eines sechsten Hash-Werts durch Hashen einer Kombination, die den vierten Hash-Wert und den fünften Hash-Wert umfasst; und
Erstellen des ersten verifizierten Hash-Werts, wobei Erstellen des ersten verifizierten Hash-Werts Hashen einer Kombination des dritten Hash-Werts und des sechsten Hash-Werts umfasst.

5. Verfahren nach einem der Ansprüche 1-4, weiter umfassend:
Erhalten von N zusätzlichen Teilen des Datenstroms, wobei N eine ganze Zahl > 1 ist;
Erstellen eines zweiten verifizierten Hash-Werts zur Verwendung beim Verifizieren der Gruppe von N zusätzlichen Teilen des Datenstroms; und
Hochladen des zweiten verifizierten Hash-Werts in die Datenbank (104).

6. Verfahren nach Anspruch 5, wobei
Erhalten der N zusätzlichen Teile des Datenstroms Erhalten eines fünften Teils des Datenstroms und eines sechsten Teils des Datenstroms umfasst und
Erstellen des zweiten verifizierten Hash-Werts zur Verwendung beim Verifizieren der Gruppe von N zusätzlichen Teilen des Datenstroms umfasst:
Erstellen eines siebenten Hash-Werts durch Hashen einer Kombination des fünften Teils des Datenstroms und fünfter Metadaten, die mit dem Datenstrom verknüpft sind;
Erstellen eines achten Hash-Werts durch Hashen einer Kombination des sechsten Teils des Datenstroms und sechster Metadaten, die mit dem Datenstrom verknüpft sind; und
Erstellen des zweiten verifizierten Hash-Werts unter Verwendung des siebenten Hash-Werts und des achten Hash-Werts Hashen einer Kombination des siebenten Hash-Werts und des achten Hash-Werts umfasst, um einen neunten Hash-Wert zu erstellen, und
der zweite verifizierte Hash-Wert auf dem neunten Hash-Wert basiert.

7. Verfahren zum Verifizieren von Inhalt, wobei das Verfahren durch eine Vorrichtung durchgeführt wird und umfassend:
Empfangen eines ersten Teils des Inhalts (704);
Erstellen eines ersten Hash-Werts durch Hashen einer Kombination des ersten Teils des Inhalts und erster Metadaten, die mit dem Inhalt verknüpft sind (706);
nach Empfangen des ersten Teils des Inhalts, Empfangen eines zweiten Teils des Inhalts (708);
Erstellen eines zweiten Hash-Werts durch Hashen einer Kombination des zweiten Teils des Inhalts und zweiter Metadaten, die mit dem Inhalt verknüpft sind (710);
Erstellen eines dritten Hash-Werts durch Hashen einer Kombination, die den ersten Hash-Wert und den zweiten Hash-Wert umfasst (712);
Erhalten eines ersten verifizierten Hash-Werts zum Verifizieren mindestens des ersten und zweiten Teils des Inhalts (714);
Vergleichen eines ersten Werts mit dem ersten verifizierten Hash-Wert, wobei der erste Wert auf dem dritten Hash-Wert basiert (716); und
Verifizieren des ersten und zweiten Teils des Inhalts als Ergebnis einer Bestimmung, dass der erste Wert dem ersten verifizierten Wert gleich ist (718).

8. Verfahren nach Anspruch 7, wobei die ersten Metadaten mit den zweiten Metadaten identisch sind oder sich von den zweiten Metadaten unterscheiden

9. Verfahren nach Anspruch 7, wobei die ersten Metadaten eines oder mehrere von (i) ersten Stelleninformationen und (ii) einer ersten Rahmenkennung beinhalten und wobei die zweiten Metadaten eines oder mehrere von (i) zweiten Stelleninformationen und (ii) einer zweiten Rahmenkennung beinhalten.

10. Verfahren nach Anspruch 7, weiter umfassend:
nach Empfangen des zweiten Teils des Inhalts, Empfangen eines dritten Teils des Inhalts;
Erstellen eines vierten Hash-Werts durch Hashen einer Kombination eines dritten Teils des Inhalts und dritter Metadaten, die mit dem Inhalt verknüpft sind;
nach Empfangen des dritten Teils des Inhalts, Empfangen eines vierten Teils des Inhalts;
Erstellen eines fünften Hash-Werts durch Hashen einer Kombination eines vierten Teils des Inhalts und vierter Metadaten, die mit dem Inhalt verknüpft sind;
Erstellen eines sechsten Hash-Werts durch Hashen einer Kombination, die den vierten Hash-Wert und den fünften Hash-Wert umfasst; und
Erstellen des ersten Werts, wobei Erstellen des ersten Werts Hashen einer Kombination des dritten Hash-Werts und des sechsten Hash-Werts umfasst;
wobei Verifizieren des ersten und des zweiten Teils des Inhalts als Ergebnis einer Bestimmung, dass der erste Wert dem ersten verifizierten Wert gleich ist, weiter Verifizieren des dritten und vierten Teils des Inhalts umfasst.

11. Verfahren nach einem der Ansprüche 7-10, weiter umfassend:
Erhalten von N zusätzlichen Teilen des Inhalts, wobei N eine ganze Zahl > 1 ist;
Erhalten eines zweiten verifizierten Hash-Werts zur Verwendung beim Verifizieren der Gruppe von N zusätzlichen Teilen des Inhalts;
Erstellen eines zweiten Werts basierend auf den N zusätzlichen Teilen des Inhalts;
Vergleichen des zweiten Werts mit dem zweiten verifizierten Hash-Wert; und
Verifizieren der N zusätzlichen Teile des Inhalts als ein Ergebnis einer Bestimmung, dass der zweite Wert dem zweiten verifizierten Wert gleich ist.

12. Verfahren nach Anspruch 11, wobei
Erhalten der N zusätzlichen Teile des Inhalts Erhalten eines fünften Teils des Inhalts und eines sechsten Teils des Inhalts umfasst und
Erstellen des zweiten Werts umfasst:
Erstellen eines siebenten Hash-Werts durch Hashen einer Kombination des fünften Teils des Inhalts und fünfter Metadaten, die mit dem Inhalt verknüpft sind;
Erstellen eines achten Hash-Werts durch Hashen einer Kombination des sechsten Teils des Inhalts und sechster Metadaten, die mit dem Inhalt verknüpft sind; und
Erstellen des zweiten Werts unter Verwendung des siebenten Hash-Werts und des achten Hash-Werts Hashen einer Kombination des siebenten Hash-Werts und des achten Hash-Werts umfasst, um einen neunten Hash-Wert zu erstellen, und
der zweite Wert auf dem neunten Hash-Wert basiert.

13. Vorrichtung (102) zum Erstellen verifizierbarer Datenströme, wobei die Vorrichtung (102) angepasst ist zum:
Erstellen eines ersten Hash-Werts durch Hashen einer Kombination eines ersten Teils des Datenstroms und erster Metadaten, die mit einem Datenstrom verknüpft sind (604);
Erstellen eines zweiten Hash-Werts durch Hashen einer Kombination eines zweiten Teils des Datenstroms und zweiter Metadaten, die mit dem Datenstrom verknüpft sind (606);
Erstellen eines dritten Hash-Werts durch Hashen einer Kombination, die den ersten Hash-Wert und den zweiten Hash-Wert umfasst (608); und
Hochladen eines ersten verifizierten Hash-Werts in eine Datenbank (104), wobei der erste verifizierte Hash-Wert auf dem dritten Hash-Wert basiert (610).

14. Vorrichtung (106) zum Verifizieren von Inhalt, wobei die Vorrichtung (106) angepasst ist zum:
Empfangen eines ersten Teils des Inhalts (704);
Erstellen eines ersten Hash-Werts durch Hashen einer Kombination des ersten Teils des Inhalts und erster Metadaten, die mit dem Inhalt verknüpft sind (706);
nach Empfangen des ersten Teils des Inhalts, Empfangen eines zweiten Teils des Inhalts (708);
Erstellen eines zweiten Hash-Werts durch Hashen einer Kombination des zweiten Teils des Inhalts und zweiter Metadaten, die mit dem Inhalt verknüpft sind (710);
Erstellen eines dritten Hash-Werts durch Hashen einer Kombination, die den ersten Hash-Wert und den zweiten Hash-Wert umfasst (712);
Erhalten eines ersten verifizierten Hash-Werts zum Verifizieren mindestens des ersten und zweiten Teils des Inhalts (714);
Vergleichen eines ersten Werts mit dem ersten verifizierten Hash-Wert, wobei der erste Wert auf dem dritten Hash-Wert basiert (716); und
Verifizieren des ersten und zweiten Teils des Inhalts als Ergebnis einer Bestimmung, dass der erste Wert dem ersten verifizierten Wert gleich ist (718).

15. Computerprogramm, umfassend Anweisungen, die, wenn auf mindestens einem Prozessor ausgeführt, den mindestens einen Prozessor veranlassen, das Verfahren nach einem der Ansprüche 1 bis 6 durchzuführen.

16. Computerprogramm, umfassend Anweisungen, die, wenn auf mindestens einem Prozessor ausgeführt, den mindestens einen Prozessor veranlassen, das Verfahren nach einem der Ansprüche 7 bis 12 durchzuführen.

17. Träger, umfassend das Computerprogramm nach Anspruch 15 oder 16, wobei der Träger eines von einem elektronischen Signal, optischen Signal, Funksignal oder computerlesbaren Speichermedium ist.

## Revendications

1. Procédé de création de flux de données vérifiables, le procédé étant effectué par un dispositif et comprenant les étapes consistant à :
créer une première valeur de hachage en hachant une combinaison d'une première partie du flux de données et de premières métadonnées associées à un flux de données (604) ;
créer une deuxième valeur de hachage en hachant une combinaison d'une deuxième partie du flux de données et de deuxièmes métadonnées associées au flux de données (606) ;
créer une troisième valeur de hachage en hachant une combinaison comprenant la première valeur de hachage et la deuxième valeur de hachage (608) ; et
télécharger vers une base de données (104) une première valeur de hachage vérifiée, dans lequel la première valeur de hachage vérifiée est basée sur la troisième valeur de hachage (610).

2. Procédé selon la revendication 1, dans lequel les premières métadonnées sont identiques aux deuxièmes métadonnées ou différentes des deuxièmes métadonnées.

3. Procédé selon la revendication 1, dans lequel les premières métadonnées comprennent un ou plusieurs parmi (i) des premières informations d'emplacement et (ii) un premier identificateur de cadre, et dans lequel les deuxièmes métadonnées comprennent un ou plusieurs parmi (i) des secondes informations d'emplacement et (ii) un second identificateur de cadre.

4. Procédé selon la revendication 1, comprenant en outre les étapes consistant à :
créer une quatrième valeur de hachage en hachant une combinaison d'une troisième partie du flux de données et de troisièmes métadonnées associées au flux de données ;
créer une cinquième valeur de hachage en hachant une combinaison d'une quatrième partie du flux de données et de quatrièmes métadonnées associées au flux de données ;
créer une sixième valeur de hachage en hachant une combinaison comprenant la quatrième valeur de hachage et la cinquième valeur de hachage ; et
créer la première valeur de hachage vérifiée, dans lequel l'étape consistant à créer la première valeur de hachage vérifiée comprend le hachage d'une combinaison de la troisième valeur de hachage et de la sixième valeur de hachage.

5. Procédé selon l'une quelconque des revendications 1-4, comprenant en outre les étapes consistant à :
obtenir N parties supplémentaires du flux de données, dans lequel N est un nombre entier > 1 ;
créer une seconde valeur de hachage vérifiée à utiliser pour vérifier le groupe de N parties supplémentaires du flux de données ; et
télécharger vers la base de données (104) la seconde valeur de hachage vérifiée.

6. Procédé selon la revendication 5, dans lequel
obtenir les N parties supplémentaires du flux de données comprend l'étape consistant à obtenir une cinquième partie du flux de données et une sixième partie du flux de données, et
créer la seconde valeur de hachage vérifiée à utiliser pour vérifier le groupe de N parties supplémentaires du flux de données comprend les étapes consistant à :
créer une septième valeur de hachage en hachant une combinaison de la cinquième partie du flux de données et de cinquièmes métadonnées associées au flux de données ;
créer une huitième valeur de hachage en hachant une combinaison de la sixième partie du flux de données et de sixièmes métadonnées associées au flux de données ; et
créer la seconde valeur de hachage vérifiée en utilisant la septième valeur de hachage et la huitième valeur de hachage comprend le hachage d'une combinaison de la septième valeur de hachage et de la huitième valeur de hachage pour créer une neuvième valeur de hachage, et
la seconde valeur de hachage vérifiée est basée sur la neuvième valeur de hachage.

7. Procédé de vérification de contenu, le procédé étant effectué par un dispositif et comprenant les étapes consistant à :
recevoir une première partie du contenu (704) ;
créer une première valeur de hachage en hachant une combinaison de la première partie du contenu et de premières métadonnées associées au contenu (706) ;
après l'étape consistant à recevoir la première partie du contenu, recevoir une seconde partie du contenu (708) ;
créer une deuxième valeur de hachage en hachant une combinaison de la deuxième partie du contenu et de deuxièmes métadonnées associées au contenu (710) ;
créer une troisième valeur de hachage en hachant une combinaison comprenant la première valeur de hachage et la deuxième valeur de hachage (712) ;
obtenir une première valeur de hachage vérifiée pour vérifier au moins les première et deuxième parties du contenu (714) ;
comparer une première valeur à la première valeur de hachage vérifiée, dans lequel la première valeur est basée sur la troisième valeur de hachage (716) ; et
vérifier les première et deuxième parties du contenu suite à l'étape consistant à déterminer que la première valeur est égale à la première valeur vérifiée (718).

8. Procédé selon la revendication 7, dans lequel les premières métadonnées sont identiques aux deuxièmes métadonnées ou différentes des deuxièmes métadonnées.

9. Procédé selon la revendication 7, dans lequel les premières métadonnées incluent un ou plusieurs parmi (i) des premières informations d'emplacement et (ii) un premier identificateur de cadre, et dans lequel les deuxièmes métadonnées incluent un ou plusieurs parmi (i) des secondes informations d'emplacement et (ii) un second identificateur de cadre.

10. Procédé selon la revendication 7, comprenant en outre les étapes consistant à :
après l'étape consistant à recevoir la deuxième partie du contenu, recevoir une troisième partie du contenu ; créer une quatrième valeur de hachage en hachant une combinaison d'une troisième partie du contenu et de troisièmes métadonnées associées au contenu ;
après l'étape consistant à recevoir la troisième partie du contenu, recevoir une quatrième partie du contenu ; créer une cinquième valeur de hachage en hachant une combinaison d'une quatrième partie du contenu et de quatrièmes métadonnées associées au contenu ;
créer une sixième valeur de hachage en hachant une combinaison comprenant la quatrième valeur de hachage et la cinquième valeur de hachage ; et
créer la première valeur, dans lequel l'étape consistant à créer la première valeur de hachage vérifiée comprend le hachage d'une combinaison de la troisième valeur de hachage et de la sixième valeur de hachage,
dans lequel l'étape consistant à vérifier la première et la deuxième partie du contenu suite à l'étape consistant à déterminer que la première valeur est égale à la première valeur vérifiée comprend en outre l'étape consistant à vérifier les troisième et quatrième parties du contenu.

11. Procédé selon l'une quelconque des revendications 7-10, comprenant en outre les étapes consistant à :
obtenir N parties supplémentaires du contenu, dans lequel N est un nombre entier > 1 ;
obtenir une seconde valeur de hachage vérifiée à utiliser pour vérifier le groupe de N parties supplémentaires du contenu ;
créer une deuxième valeur basée sur les N parties supplémentaires du contenu ; comparer la deuxième valeur avec la seconde valeur de hachage vérifiée ; et vérifier les N parties supplémentaires du contenu suite à l'étape consistant à déterminer que la seconde valeur est égale à la seconde valeur vérifiée.

12. Procédé selon la revendication 11, dans lequel
obtenir les N parties supplémentaires du contenu comprend l'étape consistant à obtenir une cinquième partie du contenu et une sixième partie du contenu, et
créer la seconde valeur comprend les étapes consistant à :
créer une septième valeur de hachage en hachant une combinaison de la cinquième partie du contenu et de cinquièmes métadonnées associées au contenu ;
créer une huitième valeur de hachage en hachant une combinaison de la sixième partie du contenu et de sixièmes métadonnées associées au contenu ; et
créer la seconde valeur en utilisant la septième valeur de hachage et huitième valeur de hachage comprend le hachage d'une combinaison de la septième valeur de hachage et huitième valeur de hachage pour créer une neuvième valeur de hachage, et
la seconde valeur est basée sur la neuvième valeur de hachage.

13. Dispositif (102) de création de flux de données vérifiables, le dispositif (102) étant adapté pour :
créer une première valeur de hachage en hachant une combinaison d'une première partie du flux de données et de premières métadonnées associées à un flux de données (604) ;
créer une deuxième valeur de hachage en hachant une combinaison d'une deuxième partie du flux de données et de deuxièmes métadonnées associées au flux de données (606) ;
créer une troisième valeur de hachage en hachant une combinaison comprenant la première valeur de hachage et la deuxième valeur de hachage (608) ; et
télécharger vers une base de données (104) une première valeur de hachage vérifiée, dans lequel la première valeur de hachage vérifiée est basée sur la troisième valeur de hachage (610).

14. Dispositif (106) de vérification de contenu, le dispositif (106) étant adapté pour :
recevoir une première partie du contenu (704) ;
créer une première valeur de hachage en hachant une combinaison de la première partie du contenu et de premières métadonnées associées au contenu (706) ;
après l'étape consistant à recevoir la première partie du contenu, recevoir une seconde partie du contenu (708) ;
créer une deuxième valeur de hachage en hachant une combinaison de la deuxième partie du contenu et de deuxièmes métadonnées associées au contenu (710) ;
créer une troisième valeur de hachage en hachant une combinaison comprenant la première valeur de hachage et la deuxième valeur de hachage (712) ;
obtenir une première valeur de hachage vérifiée pour vérifier au moins les première et deuxième parties du contenu (714) ;
comparer une première valeur à la première valeur de hachage vérifiée, dans lequel la première valeur est basée sur la troisième valeur de hachage (716) ; et
vérifier les première et deuxième parties du contenu suite à l'étape consistant à déterminer que la première valeur est égale à la première valeur vérifiée (718).

15. Programme informatique, comprenant des instructions qui, lorsqu'il est exécuté sur au moins un processeur, amène l'au moins un processeur à mener à bien le procédé selon selon l'une quelconque des revendications 1 à 6.

16. Programme informatique, comprenant des instructions qui, lorsqu'il est exécuté sur au moins un processeur, amène l'au moins un processeur à mener à bien le procédé selon selon l'une quelconque des revendications 7 à 12.

17. Vecteur comprenant le programme informatique selon la revendication 15 ou 16, dans lequel le vecteur est l'un parmi un signal électronique, un signal optique, un signal radio ou un support de stockage lisible par ordinateur.
